(19) **Europäisches Patentamt / European Patent Office / Office européen des brevets**

(11) **EP 3 635 612 B1**

(12) **FASCICULE DE BREVET EUROPEEN**

(45) Date de publication et mention de la délivrance du brevet:
**20.12.2023 Bulletin 2023/51**

(21) Numéro de dépôt: **18728653.9**

(22) Date de dépôt: **08.06.2018**

(51) Classification Internationale des Brevets (IPC):
**G06V 20/58** (2022.01)

(52) Classification Coopérative des Brevets (CPC):
**G06V 20/58**

(86) Numéro de dépôt international:
**PCT/EP2018/065117**

(87) Numéro de publication internationale:
**WO 2018/224634 (13.12.2018 Gazette 2018/50)**

(54) **PROCÉDÉ ET SYSTÈME D'IDENTIFICATION D'AU MOINS UN OBJET EN DÉPLACEMENT**

VERFAHREN UND SYSTEM ZUR IDENTIFIZIERUNG VON MINDESTENS EINEM SICH BEWEGENDEN OBJEKT

METHOD AND SYSTEM FOR IDENTIFYING AT LEAST ONE MOVING OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2017 FR 1755086**

(43) Date de publication de la demande:
**15.04.2020 Bulletin 2020/16**

(73) Titulaires:
- **Renault s.a.s**
  **92100 Boulogne Billancourt (FR)**
- **Institut Francais Des Sciences Et Technologies Des**
  **Transports De L'Amenagement Et Des Reseaux (IFSTTAR)**
  **77420 Champs Sur Marne (FR)**

(72) Inventeurs:
- **MAGNIER, Valentin**
  **Sunnyvale**
  **CA 94085 (US)**
- **GODELLE, Jérôme**
  **27500 Manneville Sur Risle (FR)**

- **GRUYER, Dominique**
  **78650 Beynes (FR)**

(56) Documents cités:
**US-B1- 9 383 753**

- **ASMA AZIM ET AL: "Detection, classification and tracking of moving objects in a 3D environment", INTELLIGENT VEHICLES SYMPOSIUM (IV), 2012 IEEE, IEEE, 3 juin 2012 (2012-06-03), pages 802-807, XP032453094, DOI: 10.1109/IVS.2012.6232303 ISBN: 978-1-4673-2119-8**
- **CHRISTOPH MERTZ ET AL: "Moving object detection with laser scanners : Moving Object Detection with Laser Scanners", JOURNAL OF FIELD ROBOTICS, vol. 30, no. 1, 3 juillet 2012 (2012-07-03), pages 17-43, XP055400082, US ISSN: 1556-4959, DOI: 10.1002/rob.21430**
- **ASVADI ALIREZA ET AL: "3D object tracking using RGB and LIDAR data", 2016 IEEE 19TH INTERNATIONAL CONFERENCE ON INTELLIGENT TRANSPORTATION SYSTEMS (ITSC), IEEE, 1 novembre 2016 (2016-11-01), pages 1255-1260, XP033028501, DOI: 10.1109/ITSC.2016.7795718**

**Description**

L'invention a pour domaine technique la détection et l'identification d'objets en mouvement, notamment de véhicules automobiles.

Dans le cadre des assistances à la conduite et de la conduite autonome, on souhaite détecter, classer, et estimer le cap, la vitesse ainsi que la taille des véhicules autour d'un véhicule muni de détecteurs. Le télémètre laser à balayage, LiDAR (acronyme anglophone pour « Light Détection and Ranging ») est le seul détecteur actuellement susceptible de mesurer directement ces informations.

Il existe ainsi un besoin pour une estimation des propriétés (position, vitesse, cap, type d'objet, longueur et largeur) des objets dynamiques évoluant dans une scène routière autour du véhicule muni de télémètres laser à balayage.

Il existe également un besoin pour une classification des objets mobiles détectés.

De l'état de la technique antérieure, on connaît les documents WO2014201075A1, CN103927557_A, CN104463872_A, FR2787200 qui ne permettent pas de réaliser de détection et de classification de véhicules entre différents types de véhicules (moto, voiture, camion).

On connaît également le document AZIM et al . («Détection, classification and tracking of moving objects in a 3D environment", INTELLIGENT VEHICLES SYMPOSIUM (IV), 2012 IEEE, IEEE, 3 juin 2012 (2012-06-03), pages 802-807, XP032453094, DOI: 10.1109/IVS.2012.6232303 ISBN: 978-1-4673-2119-8) divulguant une méthode de cartographie tridimensionnelle accompagnée d'un suivi des objets mouvants autour d'un véhicule dans un environnement dynamique. Les objets en mouvement détectés sont classés et suivis en employant une technique de plus proche voisin global (GNN, Global Nearest Neighbor).

On connaît aussi le document MERTZ et al. ("Moving object détection with laser scanners : Moving Object Détection with Laser Scanners", JOURNAL OF FIELD ROBOTICS, vol. 30, no. 1, 3 juillet 2012 (2012-07-03), pages 17-43, XP055400082, ISSN : 1556-4959, DOI : 10.1002/rob.21430) divulguant une méthode de suivi d'objets tridimensionnels en utilisant des données RGB et Lidar appliquée au domaine de l'aire à la conduite.

La présente invention est définie dans le jeu de revendications exposé ci-après.

L'invention a pour objet un procédé de classification d'au moins un objet à classer autour d'un véhicule automobile comprenant au moins un télémètre laser. Le procédé comprend les étapes suivantes :

pour chaque au moins un télémètre laser, on acquiert un nuage de points comprenant au moins deux points issus d'impacts laser sur au moins un objet à classer,

on regroupe les nuages de points acquis par chaque télémètre laser dans un référentiel unique,

on détermine des ensembles de points parmi les nuages de points mis en commun en fonction de leurs coordonnées respectives et d'une distance maximale entre points,

on détermine une cible pour chaque ensemble de points, définie par des critères comprenant une boîte englobante englobant l'ensemble de points et un centre de boîte,

on détermine une liste de segments pour chaque cible s'adaptant au plus proche de la forme du contour de l'ensemble de points correspondant,

on réalise une prédiction d'une piste caractérisant la présence et le mouvement de l'objet au cours du temps déterminant l'état des pistes à l'itération courante en fonction de l'état des pistes à l'itération précédente et des équations prédictives du filtre de Kalman,

on associe chaque cible à au moins une piste, la piste acquérant les critères de la cible,

on détermine des informations d'association des cibles et des pistes en fonction de la position du centre et des dimensions de la boîte englobante associée à chaque cible et à chaque piste,

on détermine une classification des objets à classer parmi plusieurs catégories en fonction des listes de segments, des valeurs de critères afin de déterminer le type de véhicule correspondant à chaque obj et, et

on met à jour les pistes en fonction de la classification des objets autour du véhicule en appliquant la partie corrective des équations du filtre de Kalman aux critères décrivant les objets autour du véhicule.

Pour réaliser la classification des objets, on réalise les étapes suivantes :

on détermine des segments candidats pour au moins un parmi l'arrière, l'avant et/ou un côté de la cible dans la liste de segments relative à chaque cible et donc à la piste associée,

on reçoit au moins une valeur caractéristique comprenant la vitesse absolue de la piste estimée par la partie prédictive du filtre de Kalman, et si elles sont disponibles, la largeur estimée de la piste, la longueur estimée de la piste, l'accord entre la direction du vecteur vitesse et le segment caractérisant l'arrière ou l'avant du véhicule, et l'accord entre la direction du vecteur vitesse et le segment caractérisant le côté du véhicule, chaque valeur caractéristique reçue étant utilisée comme critère de classement,

pour chaque critère et pour chaque catégorie, on génère un triplet de masses initiales caractérisant la similarité, la non-similarité et l'incertitude sur le fait que l'objet appartienne à une catégorie selon un critère en comparant la valeur du critère à une plage de valeurs vraisemblables prédéfinies associées,

pour chaque catégorie, on détermine un quadruplet de masses caractérisant, respectivement, la similarité, la non-similarité, l'incertitude et le conflit par rapport à l'appartenance de la cible à la catégorie testée en combinant les triplets de masses initiales relatifs à chacun des critères testé par l'utilisation d'un opérateur de combinaison multi-critères basé sur la théorie des croyances,

on détermine un jeu de masses en réalisant une combinaison multi-objets des quadruplets de masses déterminés pour chaque catégorie afin de déterminer si les catégories sont conflictuelles, ambiguës ou si l'objet appartient à une catégorie non listée,

on calcule la probabilité pignistique en fonction de ce jeu de masses, pour chaque catégorie choisie parmi les types de véhicule , « autre catégorie » ou « inconnu »,

si la probabilité pignistique la plus élevée correspond à une catégorie de type de véhicule, on détermine que l'objet est un véhicule correspondant au type de véhicule dont la probabilité pignistique est la plus élevée et supérieure à un seuil de validation prédéterminé, si aucune probabilité pignistique n'est supérieure au seuil de validation prédéterminé, on ne peut pas effectuer de choix parmi les types de véhicule

Pour déterminer une liste de segments pour chaque cible,

on peut déterminer une liste de segments s'adaptant au plus proche de la forme du contour de l'ensemble de points,

on peut déterminer un critère de variance pour chaque segment égal à la dimension du petit axe de l'ellipse de variance associée à l'ensemble de points,

on peut déterminer si le critère de variance est supérieur à une limite prédéfinie afin de déterminer l'adéquation du segment au nuage de points,

si tel est le cas, on peut déterminer que ce segment doit être divisé en deux parties car l'ensemble de points ne respecte pas la limite prédéterminée pour le critère,

on peut déterminer le point de division du segment de sorte que l'on minimise la somme des variances des deux nouveaux segments créés par la division.

Pour déterminer des informations d'association de cibles et des pistes, on peut réaliser une association cible-piste basée sur une approche de type au plus proche voisin fonction des positions et dimensions maximales des boîtes englobantes de chaque cible et de chaque piste, les boîtes englobantes de tailles similaires étant associées dans la limite d'un ratio prédéfini.

Pour mettre à-jour les pistes, si un type de véhicule est déterminé, on peut mettre à jour le cap de l'objet en fonction de la mesure de l'orientation des segments combinés à la trajectoire de l'objet.

Les types du véhicule peuvent comprendre un véhicule à deux roues, une voiture ou un camion.

Pour réaliser une prédiction d'une piste, on peut prendre en compte un modèle d'évolution fonction du type du véhicule prenant en compte l'angle de cap pour l'estimation du déplacement au sein de la partie prédictive des équations du filtre de Kalman.

L'invention a également pour objet un système de classification d'au moins un objet à classer autour d'un véhicule automobile comprenant au moins un télémètre laser à balayage connecté à un moyen de calcul apte à réaliser les étapes du procédé décrit ci-dessus.

Ce procédé présente l'avantage de déterminer non seulement le type d'objet perçu mais aussi d'autres attributs tel que la vitesse et le cap des objets. Le fait de mettre à jour le modèle d'évolution des objets lors qu'ils sont classifiés comme véhicules assure un suivi temporel plus précis de leur mouvement.

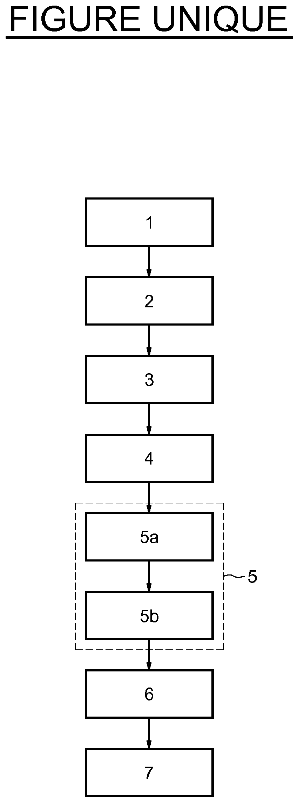

D'autres buts, caractéristiques et avantages de l'invention apparaîtront à la lecture de la description suivante, donnée uniquement à titre d'exemple non limitatif et faite en référence au dessin annexé sur lequel la figure unique illustre les principales étapes du procédé de détermination d'au moins un type de véhicule selon l'invention.

Le système de classification d'au moins un objet à classer autour d'un véhicule automobile comprend un moyen de calcul et au moins un télémètre laser à balayage fournissant chacun un nuage de points bidimensionnel renseignant sur les formes des objets de l'environnement.

En effet, les télémètres laser fonctionnent en mesurant la distance en temps de vol d'une impulsion lumineuse émise du capteur et réfléchie par la surface la plus proche suivant une direction donnée. Par extension, sur un télémètre laser à balayage, un balayage suivant une discrétisation en azimut est effectué et pour chaque pas d'angle correspondant à un azimut, une mesure de distance est obtenue. A l'issue du balayage, on obtient un nuage de points en deux dimensions correspondant à l'ensemble des mesures effectuées lors du balayage sur un plan horizontal. Le nuage de points correspondant aux réflexions de l'impulsion lumineuse est fourni directement en sortie du capteur LiDAR.

Les télémètres laser à balayage sont positionnés sur le véhicule suivant une topologie permettant, de préférence, de former une ceinture de perception la plus large possible autour du véhicule en privilégiant une symétrie de cette zone par rapport à l'axe avant.

Le moyen de calcul agrège et traite les nuages de points en vue de détecter et de classer les objets de l'environnement. En sortie du système, une liste des objets de l'environnement ainsi que de leurs attributs est publiée par le calculateur pour des applications clientes. Par attributs, on entend les coordonnées de position des impacts laser par rapport au télémètre laser. Plus précisément, le moyen de calcul est apte à réaliser les étapes de procédé de détermination du type d'au moins un véhicule tel que décrit ci-dessous

Le procédé de détermination d'au moins un type de véhicule est illustré par la figure unique sur laquelle on peut voir qu'il comprend une première étape 1 au cours de laquelle les nuages de points acquis par chaque télémètre laser sont regroupés, une deuxième étape 2 au cours de laquelle on détermine des ensembles de points parmi les nuages de points mis en commun, une troisième étape 3 au cours de laquelle on détermine des cibles en fonction des ensembles de points, une quatrième étape 4 au cours de laquelle on détermine des informations d'association de cibles et des pistes, une cinquième étape 5 au cours de laquelle on détermine des segments en fonction des ensembles de points, une sixième étape 6 au cours de laquelle on détermine une classification des objets autour du véhicule en fonction des segments, des cibles et des informations d'association de cibles et des pistes, et une septième étape 7 au cours de laquelle on met à jour les pistes en fonction de la classification des objets autour du véhicule.

Au cours de la première étape 1, on regroupe dans un même référentiel spatial les nuages de points déterminés par les télémètres laser à balayage. En effet, il est nécessaire de réaliser une agrégation des nuages de points afin de compenser les différences de positions relatives de chaque télémètre laser par rapport au véhicule et aux autres télémètres. Les points de chaque télémètre sont exprimés dans un repère ayant pour origine le télémètre lui-même. En prenant en compte le fait que chaque télémètre est positionné à un endroit différent du véhicule, il apparaît que les points obtenus par chaque télémètre ne peuvent être simplement mis en commun sous peine de ne plus correspondre à la réalité. Pour éviter une telle situation, on transpose tous les points déterminés par chaque télémètre dans un repère commun centré sur le véhicule de sorte que tous les points déterminés par tous les télémètres soient exprimés à partir de la même référence, par exemple le barycentre du véhicule.

Au cours de la deuxième étape 2, on réalise un regroupement (appelé également « clustering » en langue anglaise) de certains points du nuage de points afin de déterminer des ensembles de points proches (« clusters » en langue anglaise).

Plus précisément, on réalise une étape de regroupement dite du « plus proche voisin » en associant à chaque impact l'ensemble de points proches dont un des impacts est le plus proche. L'ensemble de points proches sélectionné se retrouve alors enrichi du nouvel impact. Un critère de distance maximal est utilisé pour éviter de regrouper des impacts trop distants.

Au cours de la troisième étape 3, on affecte chaque ensemble de points proches à un objet de mesure appelé « cible ».

Pour réaliser cela, on mesure les coordonnées maximum et minimum des impacts sur les axes longitudinaux et transversaux. Grâce à ces coordonnées, on peut créer une boîte englobante (« bounding-box » en langue anglaise) contenant l'ensemble des impacts de l'ensemble de points proches. Le centre de la boîte englobante est utilisé comme point de référence pour caractériser la position de la cible.

En pratique, les impacts mesurés par le télémètre laser sont souvent connexes (à une faible distance prés), la distance seuil utilisée lors du regroupement permet de faire la séparation des objets directement à partir du nuage de points.

Au cours de la quatrième étape 4, on réalise un traitement de segmentation des ensembles de points aboutissant à la détermination de listes de segments qui sont associées à chaque ensemble de points proches. Par segment, on entend une droite délimitée par deux points à ses extrémités, chaque point étant repéré dans un espace à deux dimensions.

Le traitement de segmentation tente d'associer des segments à chaque ensemble de points afin d'obtenir une approximation de sa forme.

Pour réaliser cela, on détermine une liste de segments s'adaptant au plus proche de la forme du contour de l'ensemble de points et on détermine le critère de variance associé. Le critère de variance associé est la dimension du petit axe de l'ellipse de variance associée à l'ensemble de points. Ce critère peut être réglé plus finement par l'homme du métier. Le critère de variance est comparé à une limite prédéfinie afin de déterminer l'adéquation du segment au nuage de points. Si le critère de variance est supérieur à la limite, on détermine que ce segment doit être divisé en deux parties car l'ensemble de points ne respecte pas la limite prédéterminée pour le critère. Le point de division est déterminé en minimisant la somme des variances des deux nouveaux segments ainsi créés. En d'autres termes, une liste de segments est un ensemble de segments associé à un ensemble de points.

L'étape de segmentation possède deux avantages majeurs : elle est peu sensible au bruit sur la position des points et n'est pas fonction du sens de parcours de la liste de points par l'algorithme. L'article de Viet Nguyen et al. « A comparison of line extraction algorithms using 2D laser rangefinder for indoor mobile robotics », présenté dans la conférence IEEE IROS 2005, décrit plus précisément les différents algorithmes courants de segmentation.

Au cours de la cinquième étape 5, on réalise une étape de suivi de piste comprenant une première sous-étape 5a de prédiction de pistes, une deuxième sous-étape 5b d'association cible-piste et une troisième sous-étape 5c de suivi de l'existence des pistes et cibles.

Une étape de « suivi de pistes » (appelé également «tracking » en langue anglaise) permet de suivre le mouvement d'objets au cours du temps. Les objets suivis au cours du temps sont appelés « pistes ». Cette étape est basée sur l'utilisation d'un filtrage de Kalman et d'une technique d'association cible-piste dite du « plus proche voisin ».

Le procédé de suivi de pistes permet de recalculer certains attributs des pistes tel que le cap et/ou le vecteur vitesse. Les pistes assurent aussi le suivi temporel d'autres propriétés dont notamment : la confiance sur l'existence, le type de véhicule détecté ainsi que les matrices de variance/covariance caractérisant l'imprécision du vecteur d'état. Le vecteur d'état peut comprendre par exemple les coordonnées de la piste (x,y), l'angle de cap de la piste, également défini comme l'angle des segments de la piste avec une direction de référence. Le vecteur d'état comprend également les vitesses associées, soit la vitesse longitudinale, la vitesse transversale, et la vitesse de rotation qui sont les dérivées par rapport au temps des coordonnées de la piste et du cap de la piste. Les vitesses sont estimées par exemple par l'intermédiaire du filtre de Kalman.

Si une piste est classée comme étant d'une catégorie correspondant à un type de véhicule (par exemple « deux-roues » ou « voiture » ou « camion »), alors le filtre de Kalman est adapté pour prendre en compte un modèle d'évolution plus fidèle au déplacement des véhicules routiers (fonction de l'angle de cap). Sinon un modèle de déplacement indépendant de l'angle de cap est utilisé.

Plus précisément, l'étape de suivi de pistes emploie un filtre de Kalman qui se décompose en deux jeux d'équations : les équations de prédiction et les équations de correction. Les équations de prédiction permettent de prédire (extrapoler) le vecteur d'état d'un objet (piste) ainsi que la matrice de variance / covariance associée à une date t (en fonction de la différence de temps avec l'itération précédente).

Les équations de prédiction permettent, en première approche, de prédire la position des pistes à l'instant courant lors de la sous-étape 5a de prédiction de pistes.

Les équations de correction permettent de corriger le vecteur d'état d'une piste grâce à l'information fournie par le vecteur d'état d'une mesure (cible). Cette correction tend à compenser l'erreur sur le vecteur d'état prédit en utilisant la donnée la plus précise (matrice de variance/covariance la plus faible) entre l'information issue de la prédiction de la piste et celle issue de la mesure. Les équations de correction corrigent donc les positions prédites des pistes grâce aux informations des cibles reçues au sein de l'étape 7 de mise à jour des pistes décrite ci-après.

Le filtre de Kalman peut également servir d'estimateur dans le sens où il est, sous certaines conditions, capable de ré-estimer la valeur de certains paramètres non-mesurés. C'est le cas ici en ce qui concerne les vitesses longitudinale, transversale et de rotation.

Au cours de la première sous-étape 5a de prédiction de piste, on détermine l'état des pistes à l'itération courante en fonction de l'état des pistes à l'itération précédente et des équations prédictives du filtre de Kalman.

Au cours de la deuxième sous-étape 5b d'association cible-piste, on réalise une association cibles-pistes basée sur une approche de type au plus proche voisin (« Global Nearest Neighbor » en langue anglaise) basé sur la comparaison des positions entre cibles et pistes. Les dimensions maximales des boîtes englobantes d'une cible et d'une piste sont aussi comparées, les boîtes englobantes de tailles similaires étant autorisées à être associées. Si le ratio entre la dimension maximale de la cible et la dimension maximale de la piste associée excède une valeur prédéfinie alors l'association est invalidée.

Au cours de la troisième sous-étape 5c de suivi de l'existence des pistes et cibles, on détermine si une cible n'a pas été associée à une piste. Si tel est le cas, on crée une nouvelle piste à laquelle on associe ladite cible et qui hérite des critères de la cible associée, notamment les dimensions de la boîte englobante.

Au cours de cette même troisième sous-étape 5c, on détermine si une piste n'a pas été associée à une cible depuis un nombre prédéterminé d'itérations. Si tel est le cas, on supprime ladite piste.

Au cours d'une sixième étape 6, on réalise une classification des objets en fonction des segments, des cibles et des informations d'association des cibles et des pistes, afin d'identifier, si cela est possible, le type de véhicule correspondant à l'objet.

La classification est réalisée après la troisième sous-étape 5c de suivi de l'existence des pistes et cibles et avant l'étape 7 de mise-à-jour des pistes. En effet, cette disposition systémique permet de connaître à quelle piste, une cible est associée et ainsi, d'obtenir le vecteur vitesse correspondant, ce dernier étant utilisé pour la classification.

La classification repose sur la combinaison de différents critères caractérisant les objets perçus comprenant la vitesse absolue de la piste, et si elles sont disponibles, la largeur estimée de la piste, la longueur estimée de la piste, l'accord entre la direction du vecteur vitesse et le segment caractérisant l'arrière ou l'avant du véhicule, et l'accord entre la direction du vecteur vitesse et le segment caractérisant le côté.

On détermine des segments candidats pour l'arrière (ou l'avant) et/ou un côté dans la liste de segments relative à chaque cible et donc à la piste associée. Ces segments sont dits « candidats » s'ils présentent une longueur susceptible de représenter soit l'arrière (ou l'avant), soit le coté d'un véhicule et si leur orientation est compatible avec le vecteur vitesse de la piste (parallèle au vecteur vitesse si le segment candidat est susceptible de représenter un côté et perpendiculaire si le segment candidat est susceptible de représenter l'arrière ou l'avant).

On compare également la vitesse absolue de la piste à une gamme de valeurs mémorisées pour la catégorie d'objet testée.

On définit un critère comme une caractéristique en particulier d'un objet parmi sa largeur, sa longueur, la valeur de sa vitesse absolue, l'écart angulaire entre sa trajectoire et un segment caractérisant l'arrière (ou l'avant) ainsi que l'écart angulaire entre sa trajectoire et un segment caractérisant un coté latéral de l'objet

On définit une catégorie comme étant choisie parmi au moins un type de véhicule parmi « deux roues », « voiture », « camion ».

Pour chaque critère et pour chaque catégorie, on détermine un triplet de masses initiales caractérisant, respectivement, la similarité, la non-similarité et l'incertitude {m(H), m($\overline{\text{H}}$), m($\Omega$)} sur le fait que l'objet appartienne à une catégorie selon un critère en comparant la valeur du critère considéré (longueur, largeur, accord entre l'angle du vecteur vitesse et angle d'un segment et vitesse) à un intervalle de valeurs admissibles du critère relatif à la catégorie testée (« Deux roues », « voiture », « camion »).

Plus précisément, les valeurs du triplet sont les suivantes :

m(H) : Masse initiale selon un critère (longueur, largeurs, vitesses,...) sur le fait que l'objet mesuré appartienne bien à la catégorie testée (moto, voiture, camion)

m($\overline{\text{H}}$) : Masse initiale selon un critère (longueur, largeurs, vitesses,...) sur le fait que l'objet mesuré n'appartienne pas à la catégorie testée (moto, voiture, camion)

m($\Omega$) : Masse initiale sur l'incertitude : le critère ne permet pas de déterminer si oui ou non l'objet appartient à l'une des catégorie testée. Il y a un manque d'information.

Chaque masse initiale prend ainsi une valeur fonction de la comparaison du critère associé à la plage de valeurs admissibles associée.

Les plages de valeurs admissibles pour chacun de ces critères et pour chacune des catégories testées sont renseignées lors de la mise au point. Pour chaque critère, chaque catégorie, et chaque masse, une plage de valeurs admissibles comprend une valeur minimale en dessous de laquelle la cible ne peut être du type de véhicule testé, une valeur maximale en dessus de laquelle la cible ne peut être du type de véhicule testé, et une valeur basse et une valeur haute entre lesquelles la cible est, de manière certaine du type de véhicule testé. Entre les valeurs minimale et basse et entre les valeurs maximale et haute, la probabilité que la cible soit du type de véhicule testé varie entre le fait que la cible n'est pas du type de véhicule testé et le fait que la cible est du type de véhicule testé.

Pour chaque catégorie, on combine ensuite les triplets de masses initiales {m(H), m($\overline{\text{H}}$), m($\Omega$)} relatifs à chaque critère et à chaque catégorie testée par l'utilisation d'un opérateur de combinaison multi-critères basé sur la théorie des croyances, afin d'obtenir un quadruplet de masses caractérisant, respectivement, la similarité, la non-similarité, l'incertitude et le conflit {m(H), m($\overline{\text{H}}$), m($\Omega$), m($\emptyset$)} par rapport à l'appartenance de la cible à la catégorie testée. On note l'ajout de la masse sur les conflits entre les critères, notée m($\emptyset$), lorsque les critères ne sont pas en accord sur l'appartenance à la catégorie testée. Dans notre cas, le conflit conduit à un rejet de l'assignation de la catégorie testée à l'objet.

Un exemple d'opérateur de combinaison multi-critères basé sur la théorie des croyances est présenté dans « Gruyer, D., Royere, C., & Cherfaoui, V. (2003). Heterogeneous multi-criteria combination with partial or full information. Fusion03 {29}, 1 »

Les valeurs des masses du quadruplet de masses peuvent être calculées par l'intermédiaire des formules de la combinaison multi-critères suivantes à partir du triplet de masses initiales {m(H), m($\overline{\text{H}}$), m($\Omega$)} pour chaque critère k :

$$m_{1...K}(H) = \prod_{k=1...K}\left(1 - m_k(\overline{H})\right) - \prod_{k=1...K} m_k(\Omega) \qquad \text{(Eq. 1)}$$

$$m_{1...K}(\overline{H}) = \prod_{k=1...K}\left(1 - m_k(H)\right) - \prod_{k=1...K} m_k(\Omega) \qquad \text{(Eq. 2)}$$

$$m_{1...K}(\Omega) = \prod_{k=1...K} m_k(\Omega) \qquad \text{(Eq. 3)}$$

$$m_{1..K}(\emptyset) = 1 - \prod_{k=1..K}\left(1 - m_k(\overline{H})\right) - \prod_{k=1..K}\left(1 - m_k(H)\right) + \prod_{k=1..K}m_k(\Omega)$$

$$(Eq.\ 4)$$

k : indice d'un critère

K : nombre total de critères

L'indice 1..K qualifiant les masses du quadruplet {$m_{1..K}$(H), $m_{1..K}$(/H), $m_{1..K}$ ($\Omega$), $m_{1..K}$ ($\emptyset$)} signifie que l'ensemble des K critères a été pris en compte lors de la génération de ces masses.

On détermine ensuite un nouveau jeu de masses en réalisant une combinaison multi-objets à partir des quadruplets de masses. La combinaison multi-objets a pour objectif d'évaluer la cohérence entre les catégories d'objets testées, et de déterminer si les catégories sont conflictuelles, ambiguës ou si l'objet appartient à une catégorie non listée (m(H*)). Les équations de la combinaison multi-objets utilisent les résultats des quadruplets de masses déterminés précédemment. Afin de préciser la notation, un indice j est ajouté aux hypothèses et aux masses relatives à l'appartenance aux catégories afin d'identifier la catégorie j à laquelle l'objet est comparé.

Pour une catégorie j, on définit les masses suivantes :

$$m_j(H_j) = m_{1..K}(H)$$

$$(Eq.\ 5)$$

$$m_j(\overline{H_j}) = m_{1..K}(\overline{H}) + m_{1..K}(\emptyset)$$

$$(Eq.\ 6)$$

$$m_j(\Omega) = m_{1..K}(\Omega)$$

$$(Eq.\ 7)$$

Dans lesquelles les masses m1..K(H), m1..K(/H), $m_{1..K}$ ($\Omega$) et $m_{1..K}$ ($\emptyset$) sont les résultats de la combinaison multi-objets pour la catégorie j

Les équations de la combinaison multi-objets sont alors les suivantes :

$$m_{1..J}(H_j) = m_j(H_j) \cdot \prod_{\substack{l=1..J \\ l \neq j}}\left(m_l(\overline{H_l}) + m_l(\Omega)\right)$$

$$(Eq.\ 8)$$

$$m_{1..J}(\Omega) = \prod_{j=1..J}\left(m_j(\overline{H_j}) + m_j(\Omega)\right) - \prod_{j=1..J}m_j(\overline{H_j})$$

$$(Eq.\ 9)$$

$$m_{1..J}(H^*) = \prod_{j=1..J}m_j(\overline{H_j})$$

$$(Eq.\ 10)$$

$$m_{1..J}(\emptyset) = 1 - \left(\sum_{j=1..J}m_{1..J}(H_j) - m_{1..J}(\Omega) - m_{1..J}(H^*)\right)$$

$$(Eq.\ 11)$$

Avec :

m(H*) :masse sur le fait que la catégorie de l'objet ne soit pas l'une des catégorie connue (moto, voiture, camion)

j et l : indices d'une catégorie

J : nombre total de catégories

L'indice 1..J qualifiant les masses {$m_{1..J}$(H$_j$), mi..j(H*), $m_{1..J}$($\Omega$), $m_{1..J}$($\emptyset$)} signifie que l'ensemble des J catégories a été pris en compte lors de la génération de ces masses.

Ensuite, comme on souhaite prendre une décision, on calcule la probabilité pignistique sur chacune des catégories du cadre de discernement et y compris avec le cadre de discernement $\Omega$ lui-même qui représente l'incertitude. Pour réaliser cela, on applique l'équation suivante à chaque catégorie correspondant à un type de véhicule (« Deux roues », « Voiture », « Camion ») :

$$\text{BetP}(H_j) = \frac{1}{1 - m_{1..J}(\mathcal{E})} * \left( m_{1..J}(H_j) + \frac{1}{\|\Omega\|} * \left( m_{1..J}(\Omega) + m_{1..J}(H^*) \right) \right)$$

$$(Eq. \ 12)$$

On sélectionne la catégorie j qui a la probabilité pignistique BetP($H_j$) la plus élevée et supérieure à un seuil de validation prédéterminé. Si aucune probabilité pignistique BetP($R_j$) n'est supérieure au seuil de validation prédéterminé, aucune catégorie de véhicule n'est assignée.

Une fois que l'étape de sélection de catégories est terminée, le procédé se termine par une étape 7 de mise-à-jour des pistes au cours de laquelle, si l'objet est associé à un type de véhicule, on met à jour l'angle cap de l'objet en fonction de la mesure de l'orientation des segments combinés à la trajectoire de l'objet. L'étape 5 de suivi de cible est alors adaptée pour prendre en compte un modèle d'évolution « véhicule » prenant en compte l'angle de cap pour l'estimation du déplacement.

Le procédé étant récursif, les étapes 1 à 7 sont exécutées en boucle.

## Revendications

1. Procédé de classification d'au moins un objet à classer autour d'un véhicule automobile comprenant au moins un télémètre laser,
   comprenant les étapes suivantes :

   pour chaque au moins un télémètre laser, on acquiert un nuage de points comprenant au moins deux points issus d'impacts laser sur au moins un objet à classer,
   on regroupe les nuages de points acquis par chaque télémètre laser dans un référentiel unique,
   on détermine des ensembles de points parmi les nuages de points mis en commun en fonction de leurs coordonnées respectives et d'une distance maximale entre points,
   on détermine une cible pour chaque ensemble de points, définie par des critères comprenant notamment une boîte englobante englobant l'ensemble de points et un centre de boîte,
   on détermine une liste de segments pour chaque cible s'adaptant au plus proche de la forme du contour de l'ensemble de points correspondant,
   on réalise une prédiction d'une piste caractérisant la présence et le mouvement de l'objet au cours du temps en déterminant l'état des pistes à l'itération courante en fonction de l'état des pistes à l'itération précédente et des équations prédictives du filtre de Kalman,
   on associe chaque cible à au moins une piste, la piste acquérant les critères de la cible,
   on détermine des informations d'association des cibles et des pistes en fonction de la position du centre et des dimensions de la boîte englobante associée à chaque cible et à chaque piste,
   on détermine une classification des objets à classer parmi plusieurs catégories en fonction des listes de segments, et d'au moins une valeur de critères caractérisant les objets afin de déterminer le type de véhicule correspondant à chaque objet, et
   on met à jour les pistes en fonction de la classification des objets autour du véhicule en appliquant la partie corrective des équations du filtre de Kalman aux critères décrivant les objets autour du véhicule,
   **caractérisé par le fait que**, pour réaliser la classification des objets, on réalise les étapes suivantes :

   on détermine des segments candidats pour au moins un parmi l'arrière, l'avant et/ou un côté de la cible dans la liste de segments relative à chaque cible et donc à la piste associée,
   on reçoit au moins deux valeurs caractéristiques comprenant la vitesse absolue de la piste estimée par la partie prédictive du filtre de Kalman, et si elles sont disponibles, la largeur estimée de la piste, la longueur estimée de la piste, l'accord entre la direction du vecteur vitesse et le segment caractérisant l'arrière ou l'avant du véhicule, et l'accord entre la direction du vecteur vitesse et le segment caractérisant le côté du véhicule, chaque valeur caractéristique reçue étant utilisée comme critère de classement,

pour chaque critère et pour chaque catégorie, on génère un triplet de masses initiales caractérisant la similarité, la non-similarité et l'incertitude sur **le fait que** l'objet appartienne à une catégorie selon un critère en comparant la valeur du critère à une plage de valeurs vraisemblables prédéfinies associées,

pour chaque catégorie, on détermine un quadruplet de masses caractérisant, respectivement, la similarité, la non-similarité, l'incertitude et le conflit par rapport à l'appartenance de la cible à la catégorie testée en combinant les triplets de masses initiales relatifs à chacun des critères testé par l'utilisation d'un opérateur de combinaison multi-critères basé sur la théorie des croyances,

on détermine un jeu de masses en réalisant une combinaison multi-objets des quadruplets de masses déterminés pour chaque catégorie afin de déterminer si les catégories sont conflictuelles, ambiguës ou si l'objet appartient à une catégorie non listée,

on calcule la probabilité pignistique en fonction de ce jeu de masses, pour chaque catégorie choisie parmi les types de véhicule , « autre catégorie » ou « inconnu »,

si la probabilité pignistique la plus élevée correspond à une catégorie de type de véhicule, on détermine que l'objet est un véhicule correspondant au type de véhicule dont la probabilité pignistique est la plus élevée et supérieure à un seuil de validation prédéterminé, si aucune probabilité pignistique n'est supérieure au seuil de validation prédéterminé, on ne peut pas effectuer de choix parmi les types de véhicule.

2. Procédé selon la revendication précédente, dans lequel, pour déterminer une liste de segments pour chaque cible,

on détermine une liste de segments s'adaptant au plus proche de la forme du contour de l'ensemble de points,

on détermine un critère de variance pour chaque segment égal à la dimension du petit axe de l'ellipse de variance associée à l'ensemble de points,

on détermine si le critère de variance est supérieur à une limite prédéfinie afin de déterminer l'adéquation du segment au nuage de points,

si tel est le cas, on détermine que ce segment doit être divisé en deux parties car l'ensemble de points ne respecte pas la limite prédéterminée pour le critère,

on détermine le point de division du segment de sorte que l'on minimise la somme des variances des deux nouveaux segments créés par la division.

3. Procédé selon l'une quelconque des revendications précédentes, dans lequel, pour déterminer des informations d'association de cibles et des pistes, on réalise une association cible-piste basée sur une approche de type au plus proche voisin fonction des positions et dimensions maximales des boîtes englobantes de chaque cible et de chaque piste, les boîtes englobantes de tailles similaires étant associées dans la limite d'un ratio prédéfini.

4. Procédé selon l'une quelconque des revendications précédentes, dans lequel, pour mettre à-jour les pistes, si un type de véhicule est déterminé, on met à jour le cap de l'objet en fonction de la mesure de l'orientation des segments combinés à la trajectoire de l'objet.

5. Procédé selon l'une quelconque des revendications précédentes, dans lequel les types de véhicule comprennent un véhicule à deux roues, une voiture ou un camion.

6. Procédé selon l'une quelconque des revendications précédentes, dans lequel, pour réaliser une prédiction d'une piste, on prend en compte un modèle d'évolution fonction du type du véhicule prenant en compte l'angle de cap pour l'estimation du déplacement au sein de la partie prédictive des équations du filtre de Kalman.

7. Système de classification d'au moins un objet à classer autour d'un véhicule automobile comprenant au moins un télémètre laser à balayage connecté à un moyen de calcul apte à réaliser les étapes de procédé selon l'une quelconque des revendications précédentes.

**Patentansprüche**

1. Verfahren zur Klassifizierung mindestens eines zu klassifizierenden Objekts um ein Kraftfahrzeug herum, das mindestens einen Laserentfernungsmesser umfasst, umfassend die folgenden Schritte:

für jeden mindestens einen Laserentfernungsmesser wird eine Punktwolke erfasst, die mindestens zwei Punkte umfasst, die aus dem Auftreffen des Lasers auf mindestens ein zu klassifizierendes Objekt herrühren,

die von jedem Laserentfernungsmesser erfassten Punktwolken werden in einem einzigen Bezugssystem zusammengefasst,

es werden Punktmengen unter den zusammengelegten Punktwolken in Abhängigkeit von ihren jeweiligen Koordinaten und von einem maximalen Abstand zwischen Punkten bestimmt,

für jede Punktmenge wird ein Ziel bestimmt, das durch Kriterien definiert wird, umfassend insbesondere eine Bounding-Box, die die Punktmenge und einen Boxmittelpunkt umschließt,

für jedes Ziel wird eine Liste mit Segmenten bestimmt, die sich der Form der Kontur der entsprechenden Punktmenge möglichst nah anpassen,

es wird eine Prädiktion eines Weges durchgeführt, der das Vorhandensein und die Bewegung des Objkts im Laufe der Zeit kennzeichnet, indem der Zustand der Wege bei der aktuellen Iteration in Abhängigkeit von dem Zustand der Wege bei der vorhergehenden Iteration und von prädiktiven Gleichungen des Kalman-Filters bestimmt wird,

jedes Ziel wird mindestens einem Weg zugeordnet, wobei der Weg die Kriterien des Ziels erwirbt,

es werden Informationen zur Zuordnung der Ziele und der Wege in Abhängigkeit von der Position des Mittelpunkts und von den Abmessungen der jedem Ziel und jedem Weg zugeordneten Bounding-Box bestimmt,

es wird eine Klassifizierung der zu klassifizierenden Objekte unter mehreren Kategorien in Abhängigkeit von den Segmentlisten und von mindestens einem Wert von Kriterien, die die Objekte kennzeichnen, bestimmt, um den jedem Objekt entsprechenden Fahrzeugtyp zu bestimmen, und

die Wege werden in Abhängigkeit von der Klassifizierung der Objekte um das Fahrzeug herum aktualisiert, indem der korrigierende Teil der Gleichungen des Kalman-Filters auf die Kriterien angewandt wird, die die Objekte um das Fahrzeug herum beschreiben,

**dadurch gekennzeichnet, dass** zum Durchführen der Klassifizierung der Objekte die folgenden Schritte durchgeführt werden:

es werden Kandidatensegmente für das Heck und/oder den Bug und/oder eine Seite des Ziels in der Segmentliste bezüglich jedes Ziels und somit des zugeordneten Wegs bestimmt,

es werden mindestens zwei kennzeichnende Werte erhalten, umfassend die absolute Geschwindigkeit des durch den prädiktiven Teil des Kalman-Filters geschätzten Wegs und, wenn sie verfügbar sind, die geschätzte Breite des Wegs, die geschätzte Länge des Wegs, die Übereinstimmung zwischen der Richtung des Geschwindigkeitsvektors und dem Segment, welches das Heck oder den Bug des Fahrzeugs kennzeichnet, und die Übereinstimmung zwischen der Richtung des Geschwindigkeitsvektors und dem Segment, das die Seite des Fahrzeugs kennzeichnet, wobei jeder erhaltene kennzeichnende Wert als Klassifizierungskriterium verwendet wird,

für jedes Kriterium und für jede Kategorie wird ein Tripel von Anfangsmassen erzeugt, die die Ähnlichkeit, die Nichtähnlichkeit und die Unsicherheit für die Tatsache, dass das Objekt einer Kategorie gemäß einem Kriterium angehört, kennzeichnen, indem der Wert des Kriteriums mit einem Bereich zugeordneter vorgegebener wahrscheinlicher Werte verglichen wird,

für jede Kategorie wird ein Quadrupel von Massen bestimmt, die die Ähnlichkeit, die Nichtähnlichkeit, die Unsicherheit beziehungsweise den Konflikt in Bezug auf die Zugehörigkeit des Ziels zu der getesteten Kategorie kennzeichnen, indem die Tripel von Anfangsmassen bezüglich jedes der getesteten Kriterien durch die Verwendung eines auf der Evidenztheorie basierenden multikriteriellen Kombinationsoperators kombiniert werden,

es wird ein Satz von Massen bestimmt, indem man eine Multi-Objekt-Kombination der für jede Kategorie bestimmten Quadrupel von Massen durchgeführt wird, um zu bestimmen, ob die Kategorien konfliktbehaftet, mehrdeutig sind oder ob das Objekt einer nicht gelisteten Kategorie angehört,

die pignistische Wahrscheinlichkeit wird in Abhängigkeit von diesem Satz von Massen für jede Kategorie berechnet, die unter den Fahrzeugtypen, "andere Kategorie" oder "unbekannt" gewählt ist,

wenn die höchste pignistische Wahrscheinlichkeit einer Fahrzeugtypkategorie entspricht, wird bestimmt, dass das Objekt ein Fahrzeug ist, das dem Fahrzeugtyp entspricht, dessen pignistische Wahrscheinlichkeit die höchste ist und über einem vorbestimmten Validierungsschwellenwert liegt, wenn keine pignistische Wahrscheinlichkeit über dem vorbestimmten Validierungsschwellenwert liegt, kann keine Auswahl unter den Fahrzeugtypen vorgenommen werden.

2. Verfahren nach dem vorhergehenden Anspruch, bei dem, zum Bestimmen einer Liste mit Segmenten für jedes Ziel, eine Liste mit Segmenten bestimmt wird, die sich der Form der Kontur der Punktmenge möglichst nah anpassen,

ein Varianzkriterium für jedes Segment bestimmt wird, das gleich der Abmessung der kleinsten Achse der Varianzellipse ist, die der Punktmenge zugeordnet ist, bestimmt wird, ob das Varianzkriterium über einem vorgegebenen Grenzwert liegt, um die Eignung des Segments für die Punktwolke zu bestimmen,
wenn dies der Fall ist, bestimmt wird, dass dieses Segment in zwei Teile geteilt werden muss, weil die Punktmenge den für das Kriterium vorbestimmten Grenzwert nicht erfüllt,
der Teilungspunkt des Segments so bestimmt wird, dass die Summe der Varianzen der beiden durch die Teilung geschaffenen neuen Segmente minimiert wird.

3. Verfahren nach einem der vorhergehenden Ansprüche, bei dem, zum Bestimmen der Informationen zur Zuordnung von Zielen und Wegen, eine auf einem Global-Nearest-Neighbour-Ansatz beruhende Ziel-Bahn-Zuordnung durchgeführt wird, die von den Positionen und maximalen Abmessungen der Bounding-Boxes jedes Ziels und jedes Wegs abhängig ist, wobei die Bounding-Boxes mit ähnlichen Größen innerhalb der Grenze eines vorgegebenen Verhältnisses zugeordnet werden.

4. Verfahren nach einem der vorhergehenden Ansprüche, bei dem, zum Aktualisieren der Wege, wenn ein Fahrzeugtyp bestimmt wird, der Kurs des Objekts in Abhängigkeit von der Messung der Ausrichtung der mit dem Bahnverlauf des Objekts kombinierten Segmente aktualisiert wird.

5. Verfahren nach einem der vorhergehenden Ansprüche, bei dem die Fahrzeugtypen ein zweirädriges Fahrzeug, einen Pkw oder einen Lkw umfassen.

6. Verfahren nach einem der vorhergehenden Ansprüche, bei dem, zum Durchführen einer Prädiktion eines Wegs, ein vom Fahrzeugtyp abhängiges Evolutionsmodell berücksichtigt wird, indem der Kurswinkel bei der Schätzung der Bewegung im prädiktiven Teil der Gleichungen des Kalman-Filters berücksichtigt wird.

7. System zur Klassifizierung mindestens eines zu klassifizierenden Objekts um ein Kraftfahrzeug herum, das mindestens einen Laserscan-Entfernungsmesser umfasst, der mit einem Rechenmittel verbunden ist, das geeignet ist, die Verfahrensschritte nach einem der vorhergehenden Ansprüche durchzuführen.

## Claims

1. Method for classifying at least one object to be classified around a motor vehicle comprising at least one laser rangefinder,
comprising the following steps:

for each at least one laser rangefinder, a point cloud comprising at least two points resulting from laser impacts on at least one object to be classified is acquired,
the point clouds acquired by each laser rangefinder are clustered in a single reference frame,
sets of points are determined among the point clouds, said sets of points being pooled depending on their respective coordinates and on a maximum distance between points,
a target is determined for each set of points, said target being defined by criteria in particular comprising a bounding box encompassing the set of points and a box centre,
for each target a segment list containing segments fitting as closely as possible the shape of the outline of the corresponding set of points is determined,
a prediction of a track characterizing the presence and the movement of the object over time is made by determining the state of the tracks in the current iteration depending on the state of the tracks in the previous iteration and on the predictive equations of the Kalman filter,
each target is associated with at least one track, the track acquiring the criteria of the target,
target and track association information is determined depending on the position of the centre and on the dimensions of the bounding box associated with each target and with each track,
a classification of the objects to be classified among a plurality of categories is determined depending on the segment lists and on at least one value of criteria characterizing the objects, in order to determine the type of vehicle corresponding to each object, and
the tracks are updated depending on the classification of the objects around the vehicle by applying the corrective part of the equations of the Kalman filter to the criteria describing the objects around the vehicle,
**characterized in that** the following steps are carried out to classify the objects:

candidate segments for at least one among the rear, the front and/or the side of the target are determined in the segment list relating to each target and therefore to the associated track,

at least two characteristic values are received, these values comprising the absolute velocity of the track estimated by the predictive part of the Kalman filter, and if available, the estimated width of the track, the estimated length of the track, the agreement between the direction of the velocity vector and the segment characterizing the rear or the front of the vehicle, and the agreement between the direction of the velocity vector and the segment characterizing the side of the vehicle, each received characteristic value being used as a classification criterion,

for each criterion and for each category, a triplet of initial masses characterizing the similarity, the non-similarity and the uncertainty as to whether the object belongs to a category according to a criterion is generated by comparing the value of the criterion with a range of associated predefined likely values,

for each category, a quadruplet of masses characterizing similarity, non-similarity, uncertainty and conflict with respect to whether the target belongs to the tested category, respectively, is determined by combining the triplets of initial masses relating to each of the tested criteria using a multi-criteria combination operator based on belief theory,

a set of masses is determined by carrying out multi-object combination of the quadruplets of masses determined for each category in order to determine whether the categories are conflicting or ambiguous or whether the object belongs to an unlisted category,

the pignistic probability is computed depending on this set of masses, for each chosen category among the types of vehicle, "other category" or "unknown",

if the highest pignistic probability corresponds to a type-of-vehicle category, it is determined that the object is a vehicle corresponding to the type of vehicle the pignistic probability of which is highest and greater than a predetermined validation threshold, but if no pignistic probability is greater than the predetermined validation threshold, no choice can be made among the types of vehicle.

2. Method according to the preceding claim, wherein, to determine a segment list for each target,

a list of segments fitting as closely as possible to the shape of the outline of the set of points is determined, a variance criterion is determined for each segment, which criterion is equal to the dimension of the minor axis of the variance ellipse associated with the set of points,

it is determined whether the variance criterion is greater than a predefined limit in order to determine the fit of the segment to the point cloud,

if such is the case, it is determined that this segment must be divided into two parts because the set of points does not respect the limit predetermined for the criterion,

the division point of the segment is determined such that the sum of the variances of the two new segments created by the division is minimized.

3. Method according to either one of the preceding claims, wherein, to determine target and track association information, a target-track association is carried out based on a global-nearest-neighbour approach depending on the positions and maximum dimensions of the bounding boxes of each target and of each track, bounding boxes of similar sizes being associated within the limit of a predefined ratio.

4. Method according to any one of the preceding claims, wherein, in order to update the tracks, if a type of vehicle is determined, the heading of the object is updated depending on the measurement of the orientation of the segments combined with the path of the object.

5. Method according to any one of the preceding claims, wherein the types of vehicle comprise a two-wheeled vehicle, a car or a truck.

6. Method according to any one of the preceding claims, wherein, in order to make a prediction of a track, a model of motion is employed that depends on the type of vehicle, this model taking into account the heading angle when movement is estimated within the predictive part of the equations of the Kalman filter.

7. System for classifying at least one object to be classified around a motor vehicle, comprising at least one scanning laser rangefinder connected to a computing means that is able to carry out the steps of the method according to any one of the preceding claims.

# FIGURE UNIQUE

## RÉFÉRENCES CITÉES DANS LA DESCRIPTION

**Documents brevets cités dans la description**

- WO 2014201075 A1
- CN 103927557 A
- CN 104463872 A
- FR 2787200

**Littérature non-brevet citée dans la description**

- Détection, classification and tracking of moving objects in a 3D environment. **AZIM et al.** INTELLIGENT VEHICLES SYMPOSIUM (IV), 2012 IEEE. IEEE, 03 Juin 2012, 802-807
- **MERTZ et al.** Moving object détection with laser scanners : Moving Object Détection with Laser Scanners. *JOURNAL OF FIELD ROBOTICS,* 03 Juillet 2012, vol. 30 (1), ISSN 1556-4959, 17-43
- **VIET NGUYEN et al.** A comparison of line extraction algorithms using 2D laser rangefinder for indoor mobile robotics. *IEEE IROS,* 2005
- **GRUYER, D. ; ROYERE, C. ; CHERFAOUI, V.** Heterogeneous multi-criteria combination with partial or full information. *Fusion03,* 2003, vol. 29, 1